(19) Europäisches Patentamt
European Patent Office
Office européen des brevets

(11) **EP 2 595 297 A2**

(12) **EUROPEAN PATENT APPLICATION**

(43) Date of publication:
**22.05.2013 Bulletin 2013/21**

(51) Int Cl.:
*H02M 7/06* (2006.01) *H02M 1/12* (2006.01)
*H02M 1/14* (2006.01) *H01F 30/02* (2006.01)

(21) Application number: **12192073.0**

(22) Date of filing: **09.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.11.2011 US 201113300482**

(71) Applicant: **Honeywell International Inc.**
**Morristown, NJ 07962-2245 (US)**

(72) Inventors:
• **Ganev, Evgeni**
**Morristown,**
**New Jersey 07962-2245 (US)**

• **Warr, William**
**Morristown,**
**New Jersey 07962-2245 (US)**
• **Chen, Keming**
**Morristown,**
**New Jersey 07962-2245 (US)**

(74) Representative: **Houghton, Mark Phillip**
**Patent Outsourcing Limited**
**1 King Street**
**Bakewell, Derbyshire DE45 1DZ (GB)**

(54) **Integrated AC/DC power converter with autotransformer and boosting capabilities**

(57) A composite-like AC-to-DC converter has boosting capabilities. The term "composite AC-to-DC converter" has been coined to distinguish a converter using two or more conversion methods in parallel. All the autotransformer designs for the boost topology composite-like system begin with vector diagrams constructed using the tips of the line-to-line voltage vectors. A constructor arc is swung between these tips equal to the length of the line-to-line voltage vector span. The number of autotransformer three-phase outputs is then determined by the number of equally spaced rays drawn from the opposite vector tip to the arc. The intersection of points of these rays with the arc are used to design the composite-like autotransformer's winding's voltage ratios and interconnections.

FIG. 4

EP 2 595 297 A2

**Description**

BACKGROUND OF THE INVENTION

The present invention relates to apparatus and methods for an electric power alternate current (AC)-to-direct current (DC) converter employing asymmetric autotransformer technology and, more particularly, to apparatus and methods for an electric power AC-to-DC converter having boosting capabilities.

AC-to-DC converters play a significant role in the modern aerospace/military industry. This is particularly true in the area of more electric architecture (MEA) for aircraft and spacecraft.

The commercial aircraft business is moving toward MEA having no bleed-air environmental control systems (ECS), variable-frequency (VF) power distribution systems, and electrical actuation. A typical example is the Boeing 787 platform. The Airbus A350 airplane incorporates a large number of MEA elements. In the future, the next-generation Boeing airplane (replacement for the 737) and the Airbus airplane (replacement for the A320), will most likely use MEA. Some military aircraft already utilize MEA for primary and secondary flight control among other functions.

Military ground vehicles have migrated toward hybrid electric technology, where the main propulsion is performed by electric drives. Therefore, substantial demand for increased power electronics in that area has emerged. Future space vehicles will require electric power-generation systems for thrust vector and flight control actuation. These systems must be more robust and offer greatly reduced operating costs and safety compared to the existing Space Shuttle power systems.

These new aerospace and military trends have significantly increased electrical power-generation needs. The overall result has been a significant increase in the challenges to accommodate electrical equipment to the new platforms. A new set of electrical power quality and electromagnetic interference (EMI) requirements has been created to satisfy system quality and performance. The latest tendency, as a part of MEA, is the energy-efficient aircraft where electric power and heat management are inter-related. Therefore, overall system performance improvement and specifically power density increase are necessary for the new-generation hardware. This has led to increased operating voltages, and efforts to reduce system losses, weight, and volume. This particularly applies to the AC-to-DC conversion, which is a substantial contributor to the weight, volume, and cost of the power conversion electronics.

Power quality is a major concern for MEA aircraft because a large number of electric power systems and equipment are installed on the same bus. The power quality of these systems and equipment has much more stringent requirements to ensure that all power supplies/utilization equipment function properly together. For power supply equipment, additional monitoring features are implemented to detect and isolate equipment, or groups of equipment, that may experience a power quality issue. This isolation capability is to protect the other operating power supplies and utilization equipment.

For power utilization equipment, strict power quality requirements are imposed. Some reasons for the requirements are listed below:

- Equipment contributing to power quality problems causes other equipment to fail.
- Equipment is prevented from achieving its design performance or reliability due to the reduced power quality of the source.
- Perhaps to meet a desired minimum weight, equipment designed with reduced or no power margin tends to be more susceptible to power quality issues. Also, equipment designed to minimize weight tends to create power quality issues.
- Equipment can fail due to self-generated power quality problems.

Power quality requirements for AC electrical equipment consist of a large number of parameters. Some of these are listed below:

- Current distortion
- Inrush current
- Voltage distortion
- Voltage modulation
- Power factor
- Phase balance
- DC content

Current distortions composed of AC harmonics are the key design drivers for equipment. The requirements for current harmonics, subharmonics, and interharmonics specify the allowable distortion as a function of multiples of the fundamental frequency of the input voltage. A typical current harmonic spectrum of an AC to DC converter includes all odd harmonics up to 39, with limits ranging from 10 to 0.25 percent of the maximum current fundamental. The current distortion requirement is a key design driver since it usually significantly impacts the equipment weight. Current distortion also is specified as a function of the equipment-rated power because the higher power equipment has more influence on the power bus.

For AC-to-DC converters, the requirements for the DC output are also important. The requirements include ripple voltage and voltage droop. The ripple voltage and voltage droop determine the DC operating range of the output equipment such as inverters.

When converting three-phase AC to DC, the most typical method is to employ a single three-phase full-wave rectifier in which six rectifying elements are connected in a bridge configuration. In such a three-phase full-wave rectifier, DC voltage is output by changing over the rectifying elements so that they successively conduct at intervals of 60°. However, with this method, the rectified DC voltage contains a voltage ripple of large amplitude having a period of six times the power source frequency, producing harmonics.

Historically, the passive AC-to-DC converters have been dominating in the aerospace power electronics industry because quality requirements, lack of stringent EMI compliance requirements, and no need of regeneration of electric power to the distribution bus. The passive AC-to-DC converters usually comprise diodes and filtering capacitors. They present low losses, high reliability, and relative low weight and volume. The main representative for a three-phase distribution bus is the three-phase diode bridge, which comprises six diodes and one smoothing capacitor in its minimal configuration. The main disadvantages of those converters are the high level of harmonic content in the input currents caused by the six-step commutation and the inability to transfer power to the opposite direction.

As a part of the MEA initiative, increased-power-level electronic equipment has been installed on the latest platforms. The above results in a large quantity of utilization hardware connected to the same distribution bus. Hence, a more complex relationship between various loads and the power generation system is created. A mitigation provision is to create well-defined stringent power quality and EMI compliance requirements. The conventional three-phase diode bridge does not satisfy the new environment. Complex passive filters must be added for input harmonic compliance, which leads to substantial weight penalty.

The next improvement to the three-phase diode bridge has been made by implementing various passive schemes with increased steps of commutation; the larger the number of rectified phases, the lower the amplitudes of the input harmonics. Also, some low-frequency harmonics disappear with larger commutation frequency. The high-frequency harmonics are easy to mitigate with smaller inductors and capacitors. To increase the number of commutation steps from 6 to 12 or 18, the three-phase distribution bus is converted to a six- or nine-phase bus and then rectified. A great variety of transformers and autotransformers can be used to perform those tasks. It is believed that 18-pulse converters are smaller than 12-pulse converters. So designed multi-pulse AC-to-DC converters experience increased weight and volume, worse losses, and reduced reliability. However, at this point these solutions look most attractive for medium-to-low-power-level applications when unidirectional power transfer only is required.

The drive for energy-efficient aircraft postulated the need for bidirectional power transfer. This created an opportunity to reuse the regenerated power coming from some loads like electrical actuators. Active rectification came along to satisfy this complex task. The most common active rectifier is a three-phase bridge that comprises six diodes, six switching devices, a DC link capacitor, and three interface inductors for decoupling with the distribution bus. In order to implement proper high-performance operation, sophisticated vector control algorithms are required. This leads to use of additional DSP-based control electronics with a gate driver for each switching device. Power quality compliance is relatively easy due to controllability of the input currents wave shape. EMI compliance is more difficult due to differential and common mode noises coming from the switching devices. Quite competitive AC-to-DC converters with bidirectional capability are obtained. However, reliability is drastically reduced due to increased number of components and the connections between them. There is a great variety of active rectifiers with different characteristics. Their success is application driven; therefore, there is no clear overall winner. Some active AC-to-DC converters are not bidirectional, e.g., Vienna rectifiers.

Historically passive AC-to-DC converters have been dominating in the aerospace industry because of their simplicity and better reliability.

The term "composite AC-to-DC converter" has been coined to distinguish a converter using two or more conversion methods in parallel. The concept for a composite AC-to-DC converter originated as a further improvement towards smaller size, lower weight, and greater efficiency for an autotransformer.

A new concept was recently developed that uses a 24-pulse system. The exact name of the system is "Composite AC-to-DC converter 24 pulse vertex". All the autotransformers used in these composite systems satisfy a transformer vector diagram constructed using the vertices of an equilateral triangle and an arc swung between them equal to the length of one of the triangle's legs. The number of autotransformer three-phase outputs is then determined by the number of equally spaced rays drawn from the opposite vertex of the equilateral triangle, hence the descriptor "vertex" added to help identify its type. The intersection points of these rays with the arc are used to design the autotransformer's windings voltage ratios and interconnections. An autotransformer designed this way has output voltages of lower amplitude than the voltage source, while the voltage source amplitude alone fixes the system's DC output level. Because of the voltage differences the load current splits into two paths. A large portion of the load current is rectified directly through a main rectifier bridge. The remainder of the load current flows through the autotransformer and is rectified by auxiliary bridge rectifiers. This composite AC-to-DC converter concept reduces autotransformer size and weight and greatly improves the system efficiency.

Another concept has been developed called a midpoint autotransformer for composite AC-to-DC converters. This concept satisfies a transformer diagram constructed using the vertices of an equilateral-triangle and an arc swung between them equal to the length of one of the triangle's legs. The number of autotransformer phase outputs is then determined by the number of equally spaced rays drawn from the midpoint of the equilateral triangle. The intersection points of these rays with the arc are used to design the autotransformer's windings voltage ratios and interconnections. An autotransformer designed this way has output voltages of lower amplitude than the voltage source, while the voltage source amplitude alone fixes the DC output level of the system. Because of the voltage differences the load current splits into two paths, a large portion of the load current is rectified directly through a main rectifier bridge. The remainder of the load current flows through the autotransformer and is rectified by auxiliary bridge rectifiers. This composite AC-to-DC converter concept reduces autotransformer size and weight and greatly improves the system efficiency similarly to the previously described option.

While the discussed composite converters present a large step toward performance improvement compared to the state-of-the-art converters they do not have boosting capabilities. The rectification of a three phase 115-Vac system results in a typical output voltage value of 270 Vdc. There are many applications where the output voltage is desired to be much higher for a better performance of a consecutive power conditioning. Typical values used in some power distribution systems are 540 Vdc, +/-270 Vdc and 610 Vdc. That means that for a conventional composite AC-to-DC converter, used in a three phase 115-Vac system, the required output voltage should be about two times higher at the rectified output.

As can be seen, there is a need for a composite AC-to-DC converter with boosting capability that is able to combine the highly improved performance of the composite technology with a voltage boost capability. The asymmetric nature of the composite autotransformer is needed.

SUMMARY OF THE INVENTION

In one aspect of the present invention, a "composite-like" boosting AC-to-DC converter using an asymmetric autotransformer, comprises a main bridge rectifier receiving a large portion of of the autotransformer current; and a plurality of auxiliary bridge rectifiers, each receiving a relatively smaller portion of the autotransformer current. The portion of the input AC waveform passing to the main rectifier passes through a short path within the transformer, and each leg of the autotransformer satisfies a transformer vector diagram constructed using tips of a line-to-line voltage vector and a constructor arc is swung between these tips equal to a length of the line-to-lien voltage vector span.

In another aspect of the present invention, a method for converting AC power to DC power with a boosting AC-to-DC converter comprises passing a first portion of a load current through a short path in an autotransformer and into a main rectifier; passing a second portion of a load current though the autotransformer; and rectifying the output from the second portion passing through the autotransformer with a plurality of auxiliary bridge rectifiers, each of the auxiliary bridge rectifiers receiving the output from each leg of the autotransformer, wherein outputs of the auxiliary bridge rectifiers are connected in parallel to an output of the main rectifier, and each leg of the autotransformer satisfies a transformer vector diagram constructed using tips of a line-to-line voltage vector and a constructor arc is swung between these tips equal to a length of the line-to-lien voltage vector span.

In a further aspect of the present invention, a method for reducing the total harmonic distortion (THD) of a boosting AC-to-DC converter comprises passing a substantial portion of a load current through a short path of an autotransformer into a main rectifier; passing the remaining portion of a load current though a longer path of the autotransformer; and rectifying the output from the autotransformer with a plurality of auxiliary bridge rectifiers, each of the auxiliary bridge rectifiers receiving the output from each leg of the autotransformer, and each of the auxiliary bridge rectifiers are generally smaller than the main rectifier.

These and other features, aspects and advantages of the present invention will become better understood with reference to the following drawings, description and claims.

BRIEF DESCRIPTION OF THE DRAWINGS

Figure 1 is vector diagram showing an autotransformer boost topology capability inherent in the state of the art;

Figure 2 is a vector diagram showing a WYE configured 18-pulse "vertex" composite-like autotransformer having boost capability fixes at 1:1.87 according to an exemplary embodiment of the present invention;

Figure 3 is a vector diagram showing a WYE configured 18-pulse "vertex" composite-like autotransformer according to an exemplary embodiment of the present invention;

Figure 4 is a schematic diagram showing a simulation circuit;

Figure 5 is a graph showing the autotransformer AC input/output voltages used in the simulation circuit of Figure 4;

Figure 6 is a graph showing an expected DC droop with load for the simulation circuit of Figure 4;

Figure 7 is a graph showing input voltages and current waveforms used in the simulation circuit of Figure 4;

Figure 8 is a graph showing a Fast-Fourier Transform (FFT) of the current input waveform (400 Hz fundamental) of Figure 7;

Figure 9 is a graph showing current waveforms for all rectifier outputs for an 18-pulse composite-like autotransformer according to an exemplary embodiment of the present invention;

Figure 10 is a vector diagram showing a boost (1:2) 18-pulse "vertex" composite-like autotransformer construction diagram according to an exemplary embodiment of the present invention; and

Figure 11 is a graph showing voltages and currents within windings of one autotransformer leg for an 18-pulse composite-like autotransformer according to an exemplary embodiment of the present invention.

DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention provide a composite AC-to-DC converter with boosting capabilities. The term "composite AC-to-DC converter" has been coined to distinguish a converter using two or more conversion methods in parallel. The composite-like autotransformer designs for the boost topology system begin with vector diagrams constructed using the tips of the line-to-line voltage vectors. A constructor arc is swung between these tips equal to the length of the line-to-line voltage vector span. The number of autotransformer three-phase outputs is then determined by the number of equally spaced rays drawn from the opposite vector tip to the arc. The intersection of points of these rays with the arc are used to design the autotransformer's winding's voltage ratios and interconnections. It is noted that changing this type of autotransformer from a DELTA to a WYE directly results in a relatively smaller autotransformer conversion ratio (ACR).

The composite-like AC-to-DC converter according to the present invention may reduce autotransformer size and weight and should improve the rectification system efficiency. In addition to reduction of size and weight, a need exists for an AC-to-DC conversion method that minimizes the AC input total harmonic distortion (THD) while providing boosting capabilities. Six-pulse rectification schemes produce predictable harmonics as formulated in Equation 1:

$$F(h)=(k*q+/-1)*f1 \qquad\qquad (1)$$

where:

F(h) is the characteristic harmonic;
k is an integer beginning with 1;
q is an integer representing the number of commutations/cycle; and
f1 is the fundamental frequency.

**[0041]** [0033] The characteristic current harmonics of a six-pulse rectification system include the 5th, 7th, 11th, 13th, 17th, 19th, and 23rd of the fundamental. These harmonics have considerable magnitude and for the six-pulse system can exceed 33 percent of the fundamental. Theory predicts that going to higher pulse rectifier systems will reduce a system's current THD. For example, a 12-pulse rectifier may have about 8.5 percent current THD (no harmonic below the 11th), an 18-pulse rectifier may have about 3 percent current THD (no harmonic below the 17th), and a 24-pulse rectifier may have about 1.5 percent current THD (no harmonic below the 23rd).

Autotransformer conversion ratio (ACR) is used as means to compare different autotransformers. Equation 2 has been used as a basis of comparison of autotransformer size and weight.

$$ACR = 2*(IDC\ out * VDC\ out / \textstyle\sum(Vrms*Irms))\qquad(2)$$

where

Vrms are the voltages at each individual winding in volt -rms values;
Irms are the currents in each individual winding in amps-rms values;
VDC out is the output rectified voltage in volts; and
IDC out is the output rectified current in amps.

The units of the ACR are W/VA.

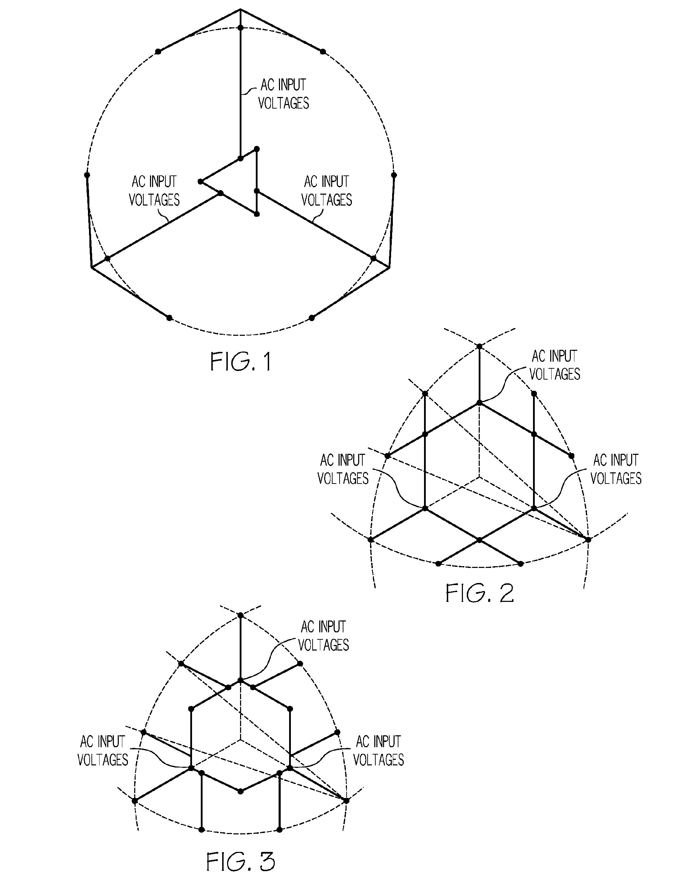

Using this equation, a typical autotransformer used in various conventional converter designs has an ACR of 1.53 W/VA. This is the autotransformer presently used in the Airbus™ A350 VCRUMC and CDMMC controller designs. When an autotransformer is designed for voltage boosting, the calculated ACR number begins to reduce. See Figure 1 which shows a boost configuration. At an autotransformer boost ratio of 1 to 2 (input to output) the ACR of this transformer is 1.0 (or slightly less). For a different comparison, an ACR of 1.0 is equivalent to the size and weight of a simple three-phase isolation, 1:2, transformer. However, if only a boosted, simple three-phase voltage is then rectified, the system's power quality suffers so this configuration still may have some benefit. In some embodiments of the present invention, the autotransformer of the boosting converter of the present invention may have an ACR greater than 1.0.

The autotransformer's interior winding turn-ratios are chiefly responsible for its voltage boost factor. The main cause of a decreasing ACR in a boost topology can be viewed as the autotransformer winding volt*amperes (VA) sum is going up while the autotransformer output power is remaining constant. The increase in volts*amperes in the autotransformer is chiefly from windings going outward from the interior connections of AC input lines.

The autotransformer used in all the former composite autotransformer topology designs, in its general form, is not capable of voltage boosting. However, for the composite-like autotransformer topology, if one moves away from the idea of bypassing a portion of the load current around the autotransformer directly to the "main" rectifier, voltage boosting becomes possible. Any autotransformer topology's ACR will begin to decrease when used for voltage boosting. Voltage boosting using a DELTA autotransformer configuration, generally, contributes a phase shift to the voltage output. Voltage boosting using a WYE configuration, generally, does not phase shift the output voltage. The diagram in Figure 2 shows a possible configuration of a WYE configuration.

All the autotransformer designs for a boost topology composite-like system begin with vector diagrams constructed using the tips of the line-to-line voltage vectors. A constructor arc may be swung between these tips equal to the length of the line-to-line voltage vector span. The number of autotransformer three-phase outputs may then be determined by the number of equally spaced rays drawn from the opposite vector tip to the arc. (Hence, the descriptor "vertex" added to help identify its autotransformer type.) The intersection points of these rays with the arc may be used to design the composite autotransformer's winding's voltage ratios and interconnections.

The autotransformer topology used for the composite AC-to-DC converter without voltage boosting begins at a much higher ACR number than the "state-of-the art" autotransformer. Simulations show that at an autotransformer boost ratio of 1 to 2 (input to output), the ACR of a WYE configured 18-pulse autotransformer is 1.5. This indicates an autotransformer probable size/weight reduction of 33%, relative to the "state-of-the art" boost topology.

Many different autotransformer configurations can be made to fit the construction diagrams depending upon the boost ratios and/or 12-, 18-, or 24-pulse-type desired.

Simulations were done for both the 1:2 and 1:1.87 boost topologies. The schematic for the 1:2 boost system is shown in Figure 3. Each leg of the 18-pulse vertex composite-like three-phase autotransformer, in this instance, has seven windings per leg.

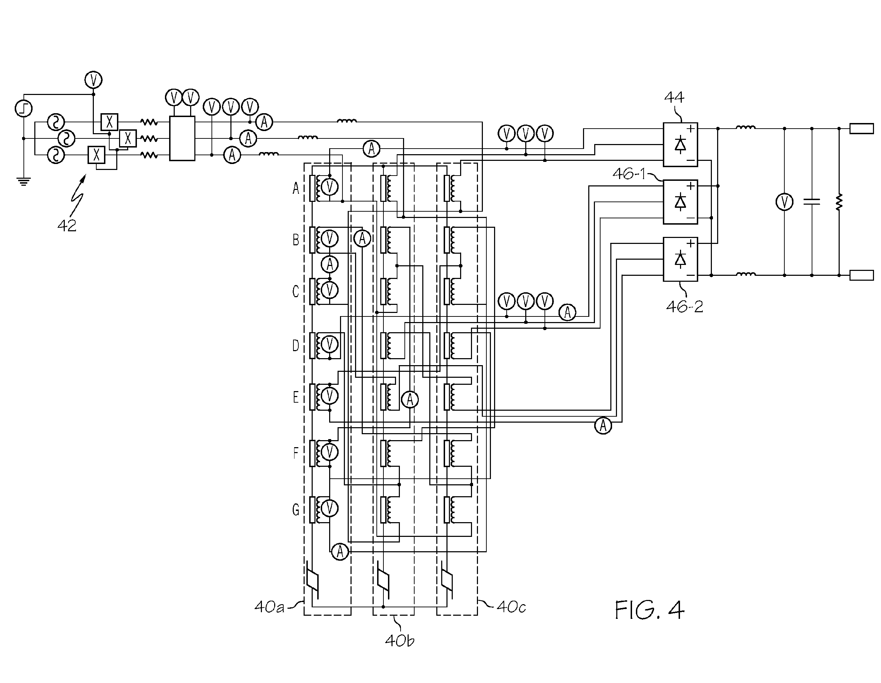

The windings associated with each of the three-phase autotransformer legs 40a, 40b, 40c are grouped within the dashed-line rectangles (shown in Figure 4). An AC input waveform 42 may be supplied to the autotransformer. A main rectifier 44 may receive a majority portion of the AC input waveform 42. A plurality of auxiliary rectifiers 46-1, 46-2 may receive the remainder of the AC input waveform 42.

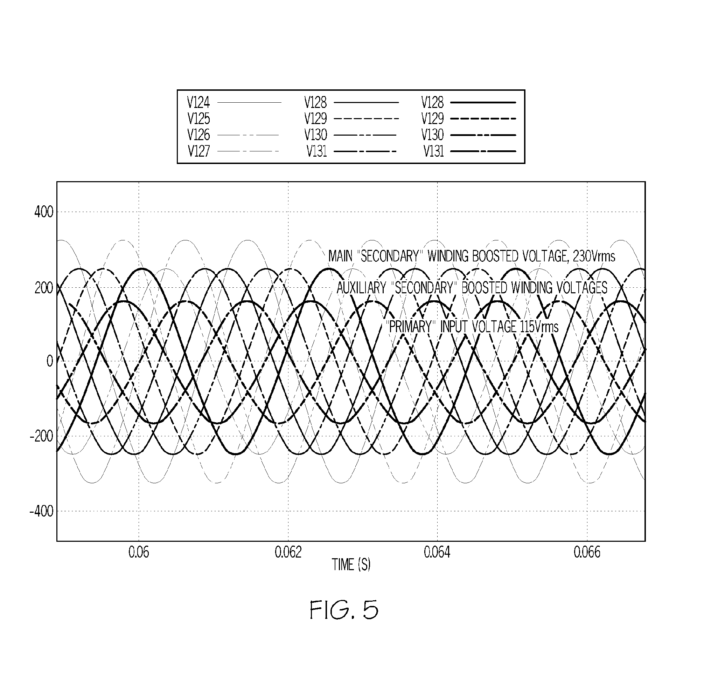

A simulation of a 9-kW system yielded the autotransformer output voltage waveforms shown in Figure 5. The voltages to the three three-phase rectifiers show the system's output characteristic with reduced voltage amplitudes at the auxiliary secondaries of the autotransformer, when compared to the main secondary. This voltage characteristic causes the source current to split between a main rectifier and auxiliary rectifiers. The main rectifier takes the bulk of the current.

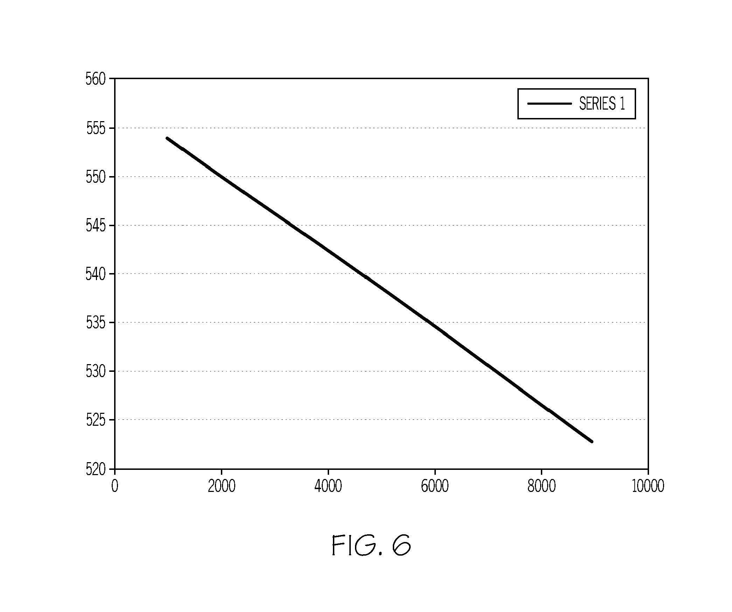

As this type of boost autotransformer output is loaded, the rectified DC output will experience some voltage droop. The voltage droop is chiefly caused by the resistances inherent within the windings. A typical voltage droop characteristic for the simulated 9-kW system is shown in Figure 6. This autotransformer voltage droop is directly related to the overall system efficiency. For this simulated case the system's efficiency is approximately 94.5 percent. Improvements to lessen the droop would become a tradeoff in autotransformer size and weight. An AC input frequency change from 400 to 800 Hz results in another 2-V drop. (The state-of-of-the-art autotransformer experiences a faster voltage droop with load and similar additional voltage drop from an AC input frequency change from 400 to 800 Hz.)

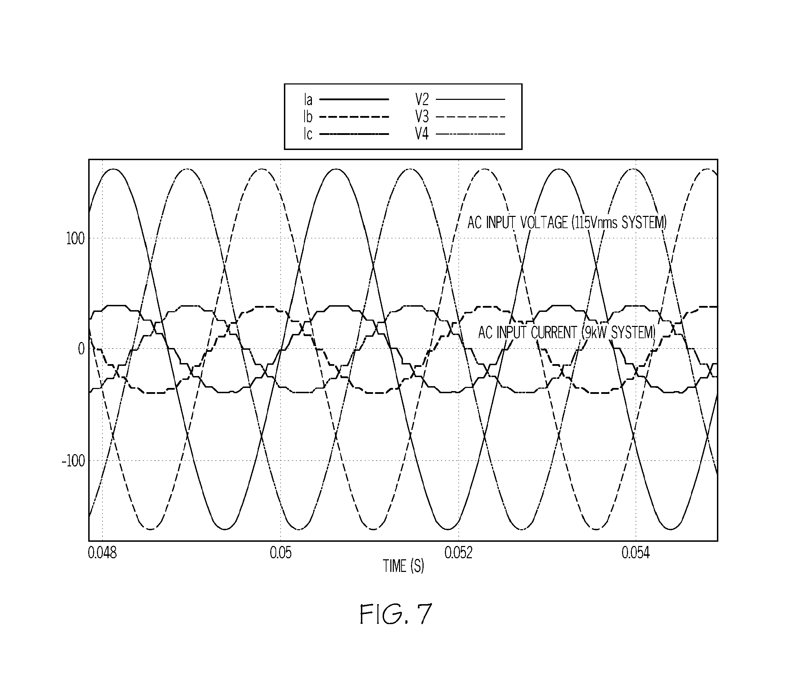

The input AC source voltages and currents show nearly unity power factor. Like all AC/DC converter passive rectifier systems, the AC input power factor will depend on additional input filters and system output loading, as shown in Figure 7.

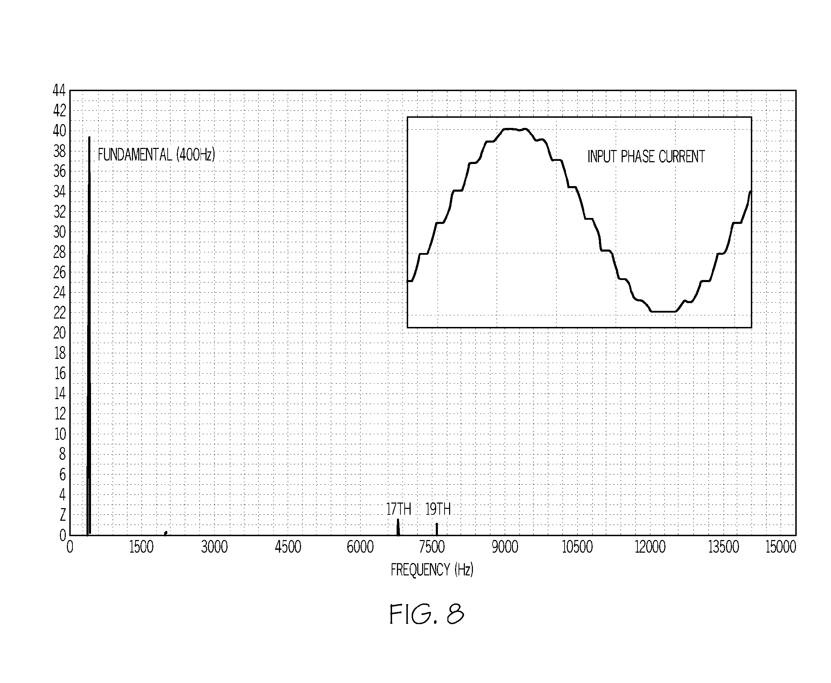

Figure 8 shows a fast Fourier transform (FFT) of the AC input current waveform (400 Hz fundamental), which shows a very low harmonic content. For this 9-kW simulation with a 400-Hz AC input the input current waveform has a 17th harmonic of approximately 4 percent. The total harmonic distortion (THD) at 400 Hz is 5.4 percent (and 3.9 percent at 800 Hz).

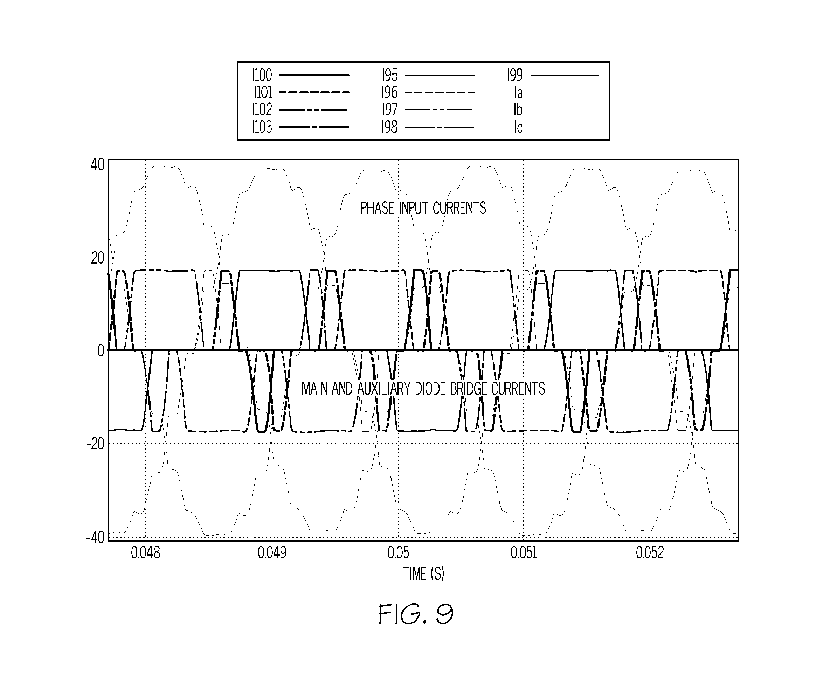

As shown in Figure 9, the portion of current to auxiliary rectifiers is less than the portion to the main rectifier. The significance of this split is that the autotransformer will have less losses if the larger current portion takes a "shorter" path within the transformer to its output. Some of the many configurations this boosting composite transformer can take have "poor" ACRs, approaching that of the "state-of-the-art" autotransformer.

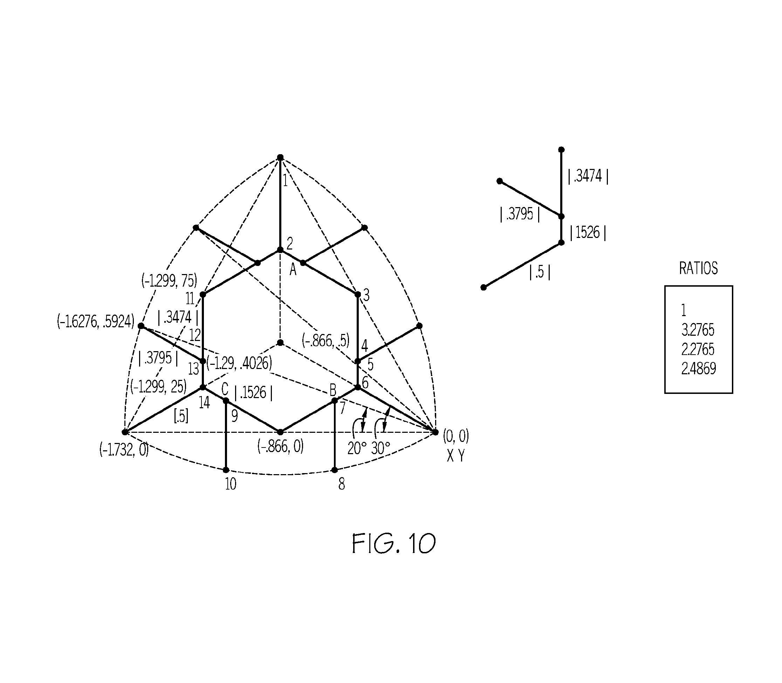

One leg of the construction diagram for the simulated 18-pulse vertex boosting autotransformer is shown in Figure 10. Many other vector combinations exist that will achieve the coordinates of intersection of the two rays and arc needed for this 18-pulse configuration.

A simulation of the 1:2 boost vertex 18-pulse AC-to-DC converter, showing the phase currents with respect to the main and auxiliary diode bridge current, is given in Figure 9. Rectifier current contributions to a 9-kW resistive load demonstrate the current division between main and auxiliary rectifiers within the composite AC/DC converter. Because the auxiliary rectifiers experience lower RMS current, with respect to the main rectifier, they could be selected to be smaller devices than those used for the main rectifier (see Figure 9).

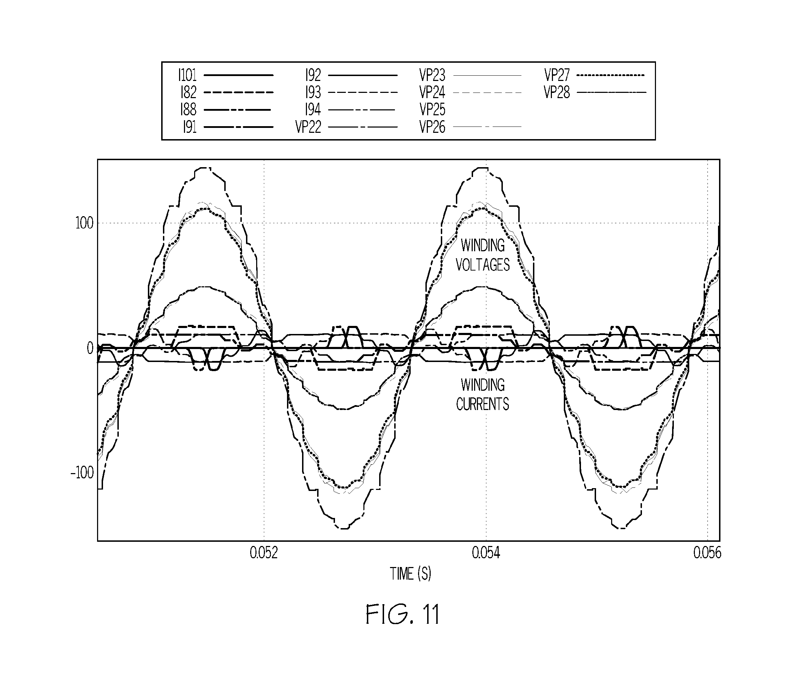

The various currents and voltages within seven windings of this autotransformer configuration, shown here for slightly more than one cycle of the input fundamental, are shown in Figure 11. One 18-pulse boosting autotransformer phase leg contained essentially three different RMS voltage values.

The method for composite-like AC-to-DC converter with boosting capabilities according to embodiments of the present inveniton presents the following advantages:

- The ACR of this conversion method is 50 percent better compared to the boosting converter estimated based on the state-of-the-art converter.
- The above may lead to a 33 percent reduction in weight of the AC-to-DC boosting conversion.
- Relatively small voltage droop with load.
- The efficiency is high since a large part of the power flows through the main six-pulse rectifier in series with relatively low resistance transformer windings.
- Additional inductors at the input of the converter may not be required.
- During transient input voltages the converter would act in a stable manner.
- During transient output loads the converter would act in a stable manner. EMI control will be easier by using smaller components due to a smoother current wave shape and higher diode frequency commutation.
- The new method may be easily used in retrofit applications because it presents reduced volume, weight, and losses.

A need exists in the aerospace industry for an AC-to-DC converter with boosting capability. The converter of the present invention should be able to provide improved performance and reduced weight, and at the same time be capable of delivering power to the DC power distribution bus and satisfying required power quality at the input AC bus. A novel method and apparatus have been discussed above that will meet these needs. Preliminary analysis has been performed to verify the feasibility of the concept. With this method for a composite-like AC-to-DC converter with boosting capabilities, the power conversion is improved substantially compared to the state-of-the-art approaches. The methods of the present invention can improve overall aircraft energy optimization, which is a main prerequisite for the future commercial and military platforms.

It should be understood, of course, that the foregoing relates to exemplary embodiments of the invention and that modifications may be made without departing from the spirit and scope of the invention as set forth in the following claims.

## Claims

1. A composite-like autotransformer boosting AC-to-DC converter comprising:

    a main bridge rectifier (44) receiving a majority portion of current from an autotransformer;
    a plurality of auxiliary bridge rectifiers (46-1, 46-2), each receiving output from each leg (40a, 40b, 40c) of the autotransformer, wherein

each output from each leg of the autotransformer is connected in parallel with an output of the main bridge rectifier, the portion of the input AC waveform (42) passing to the main bridge rectifier passes through a short path within the autotransformer, and

each leg of the autotransformer satisfies a transformer vector diagram constructed using tips of a line-to-line voltage vector and a constructor arc is swung between these tips equal to a length of the line-to-lien voltage vector span.

2. The boosting AC-to-DC converter according to claim 1 wherein the input AC waveform is split with the majority portion of load current being rectified through the main bridge rectifier via a short path through the autotransformer and the remaining portion of load current flowing through the autotransformer to be rectified by the auxiliary bridge rectifiers.

3. The boosting AC-to-DC converter according to claim 2, wherein a number of autotransformer three-phase outputs is determined by a number of equally spaced rays drawing from an opposite vector tip to the arc.

4. The boosting AC-to-DC converter according to claim 3, wherein intersection points of the rays with the arc is used to design the autotransformer's windings voltage ratios and interconnections.

5. A method for converting AC power to DC power with a boosting AC-to-DC converter, the method comprising:

passing a first portion of a load current through a short path in an autotransformer and into a main rectifier (44);
passing a second portion of a load current though the autotransformer; and
rectifying the output from the second portion passing through the autotransformer with a plurality of auxiliary bridge rectifiers (46-1, 46-2), each of the auxiliary bridge rectifiers receiving the output from each leg (40a, 40b, 40c) of the autotransformer, wherein
outputs of the auxiliary bridge rectifiers are connected in parallel to an output of the main rectifier, and
each leg of the autotransformer satisfies a transformer vector diagram constructed using tips of a line-to-line voltage vector and a constructor arc is swung between these tips equal to a length of the line-to-line voltage vector span.

6. The method of claim 5, further comprising minimizing loss from the autotransformer by providing, to the autotransformer, the second portion which is a minority portion of a total AC input.

7. The method of claim 5 or 6, wherein the first portion is a majority portion of the load current and the second portion is the remaining portion of the load current.

8. The method of claim 7, wherein each of the auxiliary bridge rectifiers are generally smaller than the main rectifier.

9. The method of any one of claims 5 through 8, wherein the converter is an 18-pulse converter.

10. The method of any one of claims 5 through 8, wherein the autotransformer has an autotransformer conversion ratio (ACR) greater than 1.

FIG. 1

FIG. 2

FIG. 3

FIG. 4

FIG. 5

FIG. 6

FIG. 7

FIG. 8

EP 2 595 297 A2

FIG. 9

FIG.10

FIG. 11

EP 2 595 297 A2